# EUROPEAN PATENT APPLICATION

(11) **EP 2 842 463 A1**
(43) Date of publication of application: **04.03.2015**
(21) Application number: 13182310.6
(22) Date of filing: 30.08.2013
(51) Int. Cl.: A47F 8/00, A63H 3/46

(54) **Flexible pivotal device for mannequin joint**

(71) Applicant: Nu Body Co., Ltd., New Taipei City 242 (TW)
(72) Inventor: Wu, Chun-Ching, 242 New Taipei City (TW)
(74) Representative: Lang, Christian

(57) **Abstract**

A flexible pivotal device (10) for a mannequin joint is arranged in a lower limb of a mannequin and comprises a female connection member (104) and a male connection member (102). The female connection member includes a first fixing plate (30), a first fixing disc (32) and a first engagement member (34). The first fixing plate has two installation holes (304). The male connection member is coupled to the female connection member and includes a second fixing disc (12); a connection element (16) having two sleeves (162) respectively inserted through two installation holes (304) and moveable thereinside, and a second engagement member (164) engaged with the first engagement member (34); and a second fixing plate (14) arranged between the second fixing disc (12) and the connection element (16), locked to the second fixing disc, and having two hooks (142)respectively coupled to two elastic elements (18) arranged inside the sleeves (162). The sleeves can be pulled away from the second fixing plate to a certain degree.

## Description

### BACKGROUND OF THE INVENTION

### Field of the Invention

The present invention relates to a mannequin structure, particularly to a flexible pivotal device for a mannequin joint.

### Description of the Related Art

In order to promote dress products, related merchandisers normally use dummies or mannequins to display clothes, shoes, hats, and accessories (such as necklaces) in their shops. Mannequins may be categorized into the life-size type and the half-body type, which are used according to requirement. For example, half-body mannequins are used to display hats or necklaces; life-size mannequins are used to display suits or one-piece dresses.

Thighs or legs of a mannequin are normally separated slightly. The circumference of the thighs or legs of a mannequin would be greater than the circumference of a lower garment (such as a narrow skirt or a pair of trousers) except the lower garment is stretchable. While replacing an unstretchable lower garment for a mannequin, the user cannot strip the unstretchable garment from the lower half body of the mannequin unless he dismounts a leg of the mannequin. It is very inconvenient for the user to dismount a leg from a mannequin each time he replaces a lower garment for the mannequin.

Accordingly, the present invention proposes a flexible pivotal device for a mannequin joint to overcome the abovementioned problem.

### SUMMARY OF THE INVENTION

The primary objective of the present invention is to provide a flexible pivotal device for a mannequin joint, wherein a lower limb of a mannequin (normally the upper region of the thigh) is separated into two sections, and wherein a male connection member and a female connection member are respectively formed on two sides of the joint of the two sections, and wherein one connection member can be tilted from the other connection member to a certain degree, whereby the user can strip a skirt or a pair of trousers from a mannequin without dismounting a leg of the mannequin.

Another objective of the present invention is to provide a flexible pivotal device for a mannequin joint, wherein a connection element of a male connection member is joined to a female connection member, and wherein the male connection member is coupled to at least one spring, and wherein another end of the spring is locked to the connection element, whereby the spring extends and can restore the male or female connection member to the original position while the male connection member and the female connection member are elastically separated.

To achieve the abovementioned objectives, the present invention proposes a flexible pivotal device for a mannequin joint, which is arranged in a lower limb of a mannequin and comprises a female connection member and a male connection member that are used to assemble the lower limb of the mannequin. The female connection member includes a first fixing plate, a first fixing disc and a first engagement member. The first fixing plate has two installation holes. The male connection member is coupled to the female connection member by a plurality of fastening elements and includes a second fixing disc, a connection element and a second fixing plate. The connection element has two sleeves and a second engagement member. Two sleeves are respectively inserted through two installation holes and moveable inside the installation holes. The second fixing plate is arranged between the second fixing disc and the connection element. The second fixing plate has two hooks each connected with an elastic element. The elastic element is arranged inside the sleeve. The sleeves can be pulled away from the second fixing plate to a certain degree. Thereby, the elastic elements are extended, and the second fixing disc and the second fixing plate are separated from the connection element by a certain distance.

### BRIEF DESCRIPTION OF THE DRAWINGS

- Fig.1: is a perspective view of a flexible pivotal device for a mannequin joint according to one embodiment of the present invention;
- Fig.2: is an exploded view of a flexible pivotal device for a mannequin joint according to one embodiment of the present invention;
- Fig.3: is an exploded view of a male connection member of a flexible pivotal device for a mannequin joint according to one embodiment of the present invention;
- Fig.4: is an exploded view of a female connection member of a flexible pivotal device for a mannequin joint according to one embodiment of the present invention;
- Fig.5: is a top view of a flexible pivotal device for a mannequin joint according to one embodiment of the present invention;
- Fig.6A: is a side sectional view schematically showing a normal state of a flexible pivotal device for a mannequin joint according to one embodiment of the present invention;
- Fig.6B: is a side sectional view schematically showing that the sleeves are tilted from the second fixing plate to a certain degree according to one embodiment of the present invention; and
- Fig.7: is a diagram schematically showing an application of a flexible pivotal device to a mannequin according to one embodiment of the present invention.

### DETAILED DESCRIPTION OF THE INVENTION

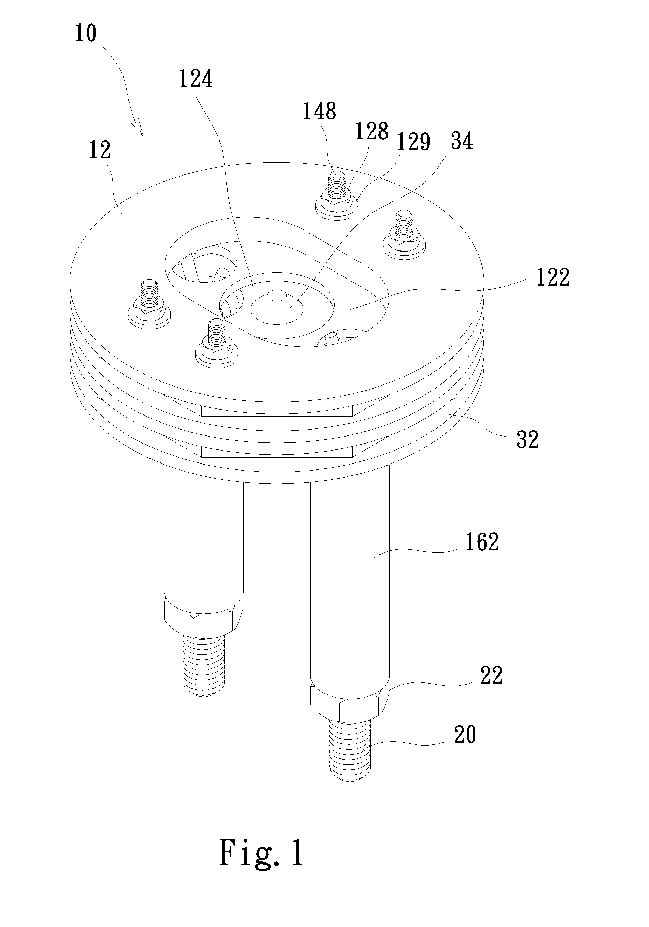

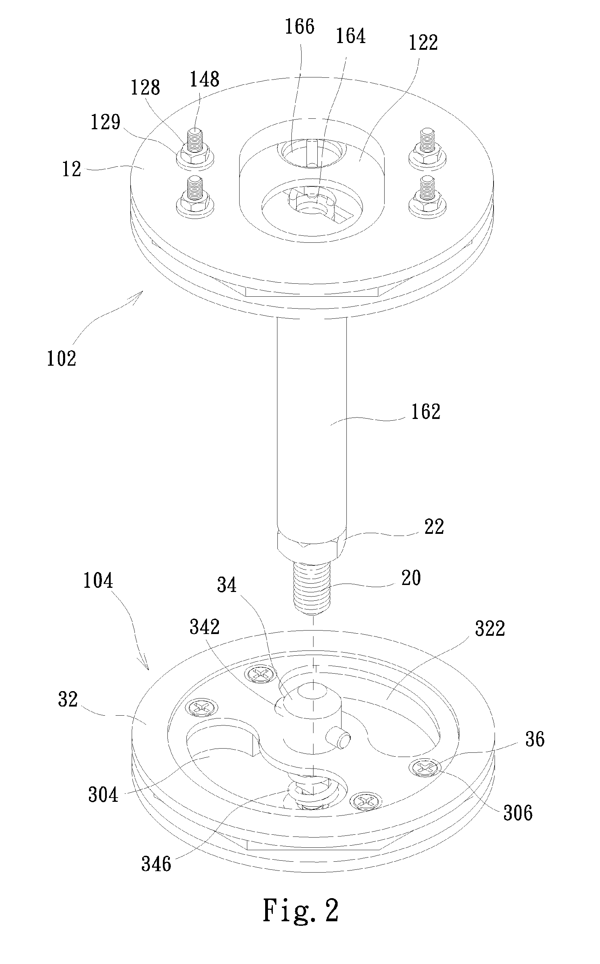

The present invention discloses a flexible pivotal device for a mannequin joint. Refer to Fig.1 and Fig.2. Fig.1 and Fig.2 are respectively a perspective view and an exploded view of a flexible pivotal device for a mannequin joint according to one embodiment of the present invention. The flexible pivotal device for a mannequin joint 10 comprises a male connection member 102 and a female connection member 104 respectively arranged in two sides of the joint of two sections of a thigh of a mannequin. In the present invention, after the male connection member 102 and the female connection member 104 are coupled to each other, one section of the thigh can be elastically tilted inward or outward to a certain degree.

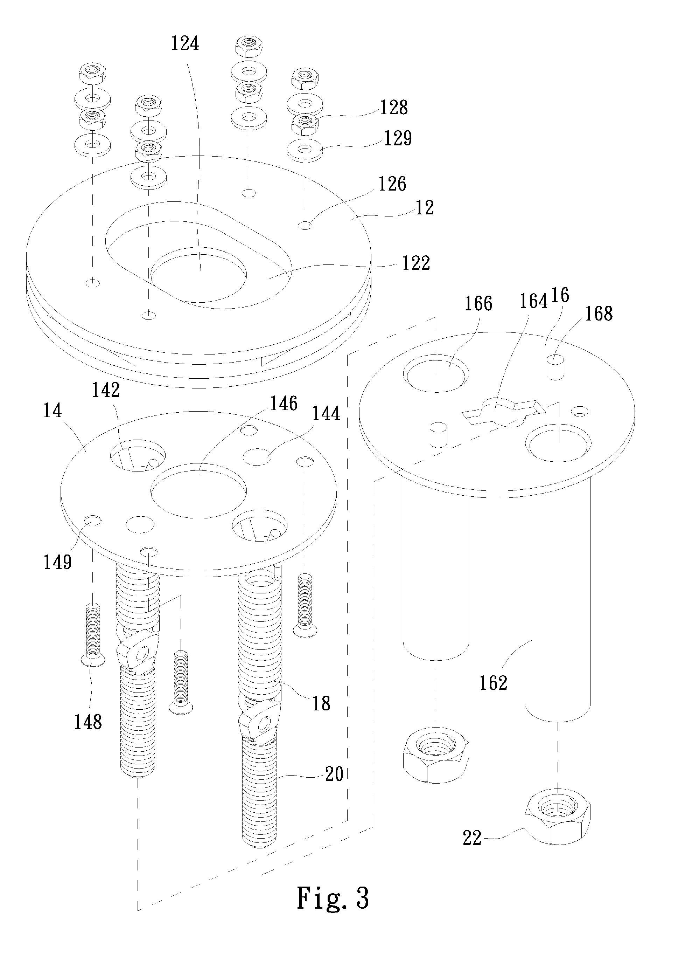

Refer to Fig.3. Fig.3 is an exploded view of a male connection member of a flexible pivotal device for a mannequin joint according to one embodiment of the present invention. The male connection member 102 includes a second fixing disc 12, a second fixing plate 14 and a connection element 16, which are arranged in sequence. The second fixing disc 12 is circular-shaped and has an elliptic recess 122 at the central region thereof and a through-hole 124 at the center thereof. A plurality of second fixing holes 126 is formed on two laterals of the recess 122. The second fixing plate 14 has two hooks 142 whose positions are corresponding to two ends of the long axis of the elliptic recess 122. The second fixing plate 14 has two positioning holes 144 whose positions are corresponding to two ends of the short axis of the elliptic recess 122. The second fixing plate 14 has a through-hole 146 at the central region thereof. The second fixing plate 14 has a plurality of second fixing holes 149 corresponding to the second fixing holes 126 and having the same number as the second fixing holes 126. A plurality of screws 148 is inserted through the second fixing holes 149 and 126 screwed into at least one washer 129 and at least one nut 128, locking the second fixing plate 14 and the second fixing plate 12 together. Thus, the second fixing plate 14 is embedded inside the second fixing disc 12; the bottom surface of the second fixing plate 14 is coplanar with the bottom surface of the second fixing disc 12. Two springs 18 are respectively coupled to the two hooks 142. The other ends of the springs 18 are respectively coupled to two threaded rods 20 each having a screw thread. The connection element 16 includes two sleeves 162, a second engagement member 164, two inlets 166 of the two sleeves 162, and two positioning protrusions 168. The springs 18 and the threaded rods 20 are inserted into the sleeves 162 via the inlets 166. Two nuts 22 are screwed into the threaded rods 20 from the other ends of the sleeves 162 to lock the threaded rods 20. The tensions of the springs 18 are controlled via adjusting the lengths by which nuts 22 are screwed into the threaded rods 20. The two positioning protrusions 168 are corresponding to the two positioning holes 144 of the second fixing plate 14. In one embodiment, the two positioning holes 144 are replaced by two positioning recesses that do not penetrate the second fixing plate 14. The positioning protrusions 168 should be fitted into the positioning holes 144 to guarantee that the connection element 16 is correctly engaged with the second fixing plate 14.

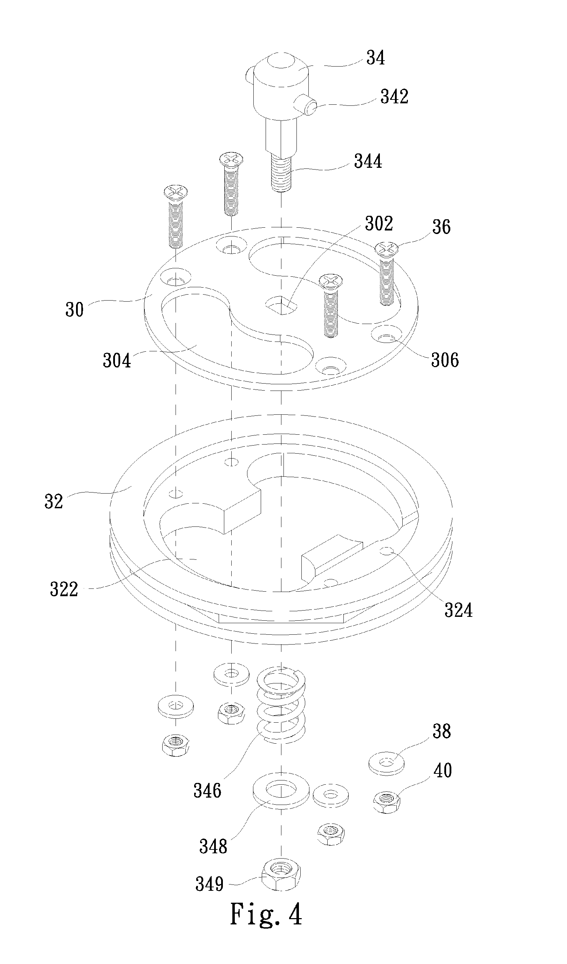

Refer to Fig.4. Fig.4 is an exploded view of a female connection member of a flexible pivotal device for a mannequin joint according to one embodiment of the present invention. The female connection member includes a first fixing plate 30, a first fixing disc 32 and a first engagement member 34. Each of the first fixing plate 30 and first fixing disc 32 is circular-shaped. The first fixing plate 30 has two installation holes 304 each with a shape of a long arc. The first fixing plate 30 has an engagement hole 302 at the central region thereof. The engagement hole 302 and the lower part of the first engagement member 34 have an identical long rectangular shape, whereby the lower part of the first engagement member 34 can be inserted through and fitted to the engagement hole 302 without rotation. The first fixing plate 30 also has a plurality of first fixing holes 306. The first fixing disc 32 has an installation opening 322 whose arc-shaped regions have a shape identical to that of the installation holes 304. The first fixing disc 32 is recessed to such a depth that the first fixing plate 30 can be embedded inside and the first fixing disc 32 and the top surface of the first fixing plate 30 is coplanar with the top surface of the first fixing disc 32. The first fixing disc 32 has a plurality of first fixing holes 324 corresponding to the first fixing holes 306 of the first fixing plate 30. A plurality of screws 36 is inserted through the first fixing holes 306 and 324 and screwed into a plurality of washers 38 and a plurality of nuts 40, locking the first fixing plate 30 to the first fixing disc 32. The first engagement member 34 has tenons 342. The cross section of the first engagement member 34 is identical to the cross section of the second engagement member 164 (shown in Fig.3). Thus, the upper part of the first engagement member 34 together with the tenon 342 can be exactly inserted into the second engagement member 164. The lower terminal of the first engagement member 34 has a screw thread 344. After the screw thread 344 has been inserted through the engagement hole 302, the screw thread 344 is sleeved by a spring 346. Then, a washer 384 and a nut 349 are used to lock the spring 346 to the screw thread 344.

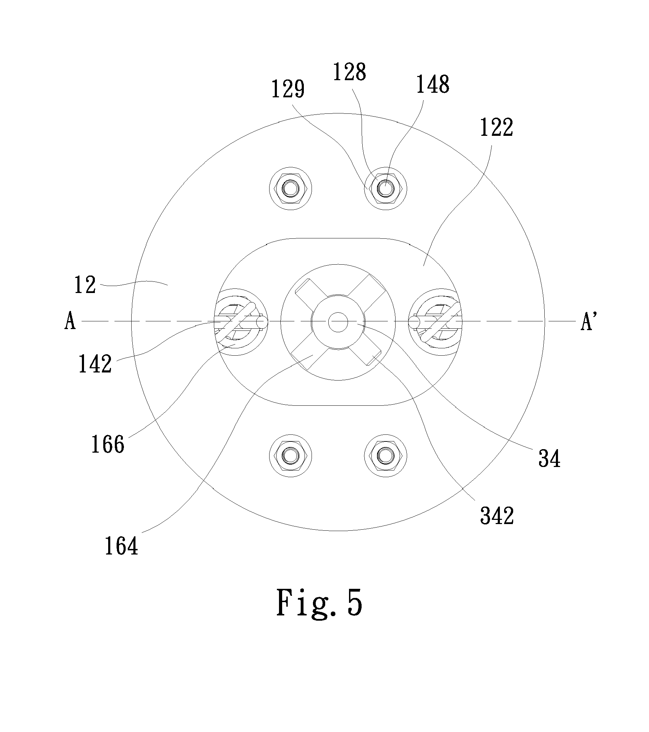

Refer to Figs.2-4 again. The two sleeves 162 of the connection element 16 of the male connection member 102 are respectively inserted through the two installation holes 304 and the installation opening 322 of the female connection member 104. The sleeves 162 can move freely inside the two installation holes 304. As shown in Fig.2, two sleeves 162 are disposed in the near-edge regions of the two installation holes 304. After the tenon 342 of the first engagement member 34 have been inserted through the second engagement member 164, the user can rotate the male connection member 102 clockwise or rotate the female connection member 104 counterclockwise, whereby the tenon 342 intersect the second engagement member 164 to form a cross as shown in Fig.5 a top view of the first engagement member 34 and the second engagement member 164. It indicates that the connection element 16 has been locked to the female connection member 104 securely. Briefly, the second fixing disc 12 and the second fixing plate 14 of the male connection member 102 are locked together with the screws 148, and the connection element 16 of the male connection member 102 is coupled to the female connection member 104.

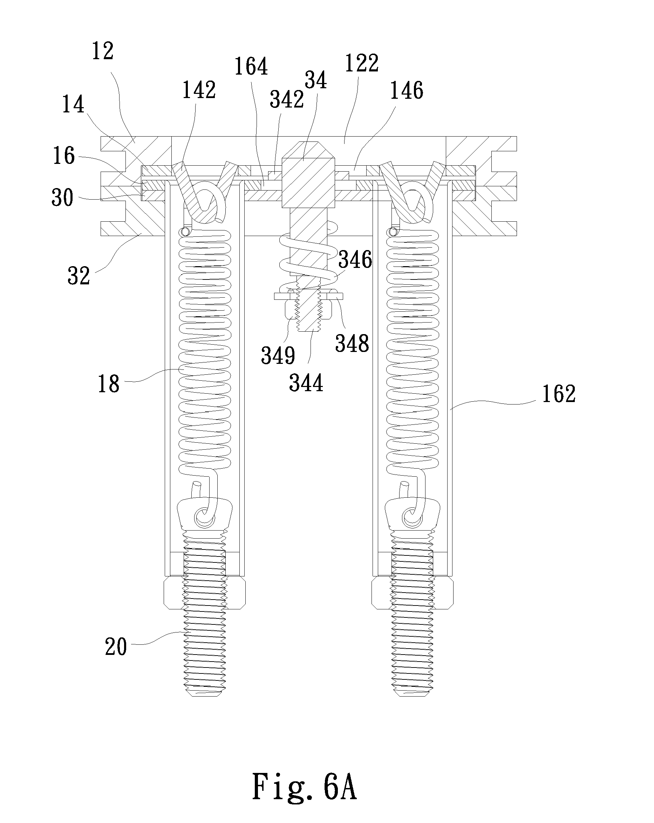

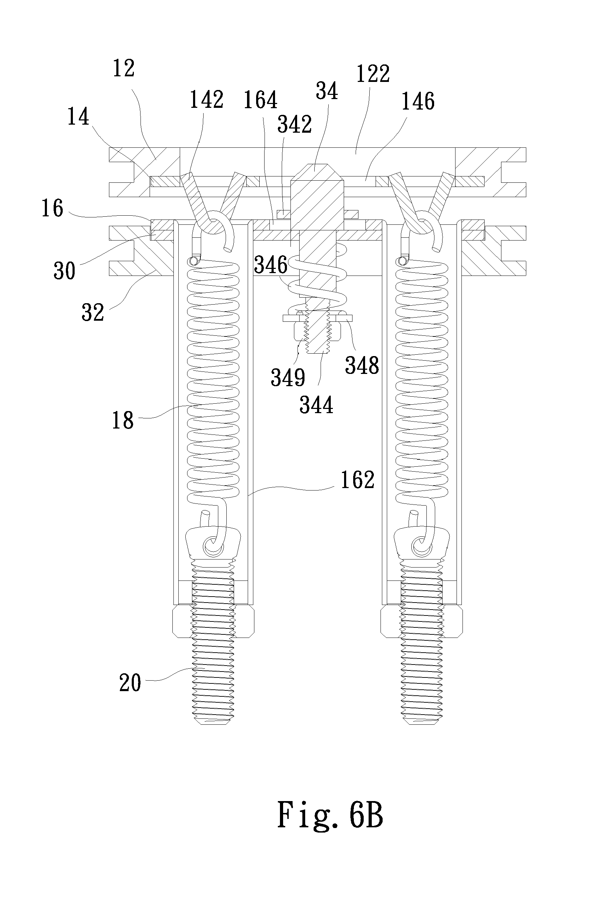

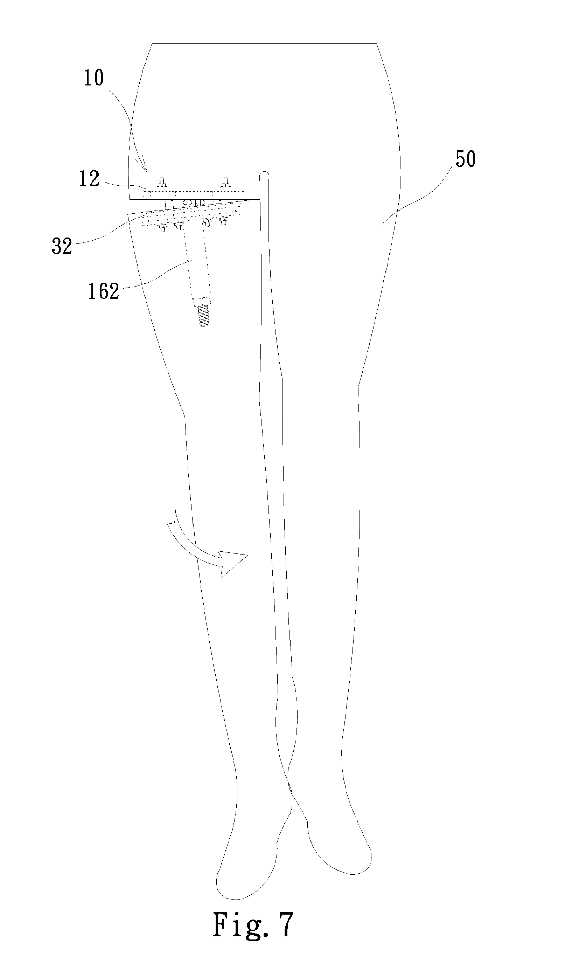

The sleeves 162 can be tilted from the second fixing plate 14 to a certain degree. Refer to Fig.6A and Fig.6B. Fig.6A is a side sectional view schematically showing a normal state of a flexible pivotal device for a mannequin joint 10 according to one embodiment of the present invention. Fig.6B is a side sectional view schematically showing that the sleeves 162 are tilted from the second fixing plate 14 to a certain degree according to one embodiment of the present invention. Both Fig.6A and Fig.6B are taken along a section line A-A' in Fig.5. It can be observed in Fig.6A: after having been inserted through the second engagement member 164, the tenon 342 protrude from the through-hole 146 of the second fixing plate 14 or even the through-hole 124 of the second fixing disc 12. Therefore, the diameter of the through-hole 146 of the second fixing plate 14 and the diameter of the through-hole 124 of the second fixing disc 12 should be greater than the size of the tenon 342. The present invention enables the male connection member 102 and the female connection member 104 to separate to a certain degree. However, the connection element 16 of the male connection member 102 is still coupled to the female connection member 104 via the first engagement member 34 and the second engagement member 164 in such a case. Refer to Fig.7. Fig.7 is a side view corresponding to Fig.6B. It is observed in Fig.7: while the sleeves 162 are tilted toward one side, the second fixing disc 12 and the second fixing plate 14, which have been locked together, will be pulled away from the connection element 16 by a certain distance; in such a case, the connection element 16 is coupled to the first fixing plate 30 and the first fixing disc 32; meanwhile, the spring 18 is extended.

In conclusion, the present invention proposes a flexible pivotal device for a mannequin joint, wherein a male connection member and a female connection member are respectively formed on two sides of the joint of two sections of a lower limb of a mannequin, and wherein one connection member can be tilted from the other connection member to a certain degree, whereby the user can strip a skirt or a pair of trousers from a mannequin without dismounting a leg of the mannequin. In the present invention, springs are used to couple the second fixing plate of the male connection member to the connection element, which is fixed to the female connection member. Thereby, the resilience of the springs will restore the male and female connection members to their original positions without using any additional force. Therefore, the present invention exempts the user from the inconvenience of dismounting a leg of a mannequin while the user intends to wear a lower garment on the mannequin or strip a lower garment from the mannequin. The user can easily strip a pair of trousers, a skirt or even a narrow skirt from a mannequin via merely pulling and tilting the lower section of a leg to shorten the span of two legs.

The embodiments described above are only to exemplify the present invention but not to limit the scope of the present invention. Any equivalent modification or variation according to the characteristic or spirit of the present invention is to be also included within the scope of the present invention.

## Claims

1. A flexible pivotal device for a mannequin joint, which is arranged in a lower limb of a mannequin, comprising
a female connection member including a first fixing plate, a first fixing disc and a first engagement member, wherein said first fixing plate has two installation holes; and
a male connection member coupled to said female connection member by a plurality of fastening elements and including
a second fixing disc;
a connection element having two sleeves and a second engagement member, wherein said sleeves are respectively inserted through said installation holes and moveable inside said installation holes, and wherein said second engagement member is engaged with said first engagement member; and
a second fixing plate arranged between said second fixing disc and said connection element, coupled to said second fixing disc, and having two hooks each connected with an elastic element, wherein said elastic element is arranged inside said sleeve, and
wherein said sleeves can be pulled away from said second fixing plate to a certain degree, whereby said second fixing disc and said second fixing plate are separated from said connection element by a certain distance, and whereby said elastic elements are extended.

2. The flexible pivotal device for a mannequin joint according to claim 1, wherein said first fixing plate is embedded inside said first fixing disc; a top surface of said first fixing plate is coplanar with a top surface of said first fixing disc; a plurality of first fixing holes is formed on corresponding positions of said first fixing plate and said first fixing disc; a plurality of sets of fastening elements is inserted through said first fixing holes to lock said first fixing plate and said first fixing disc together.

3. The flexible pivotal device for a mannequin joint according to claim 2, wherein each set of said fastening elements includes a screw, a washer and a nut.

4. The flexible pivotal device for a mannequin joint according to claim 1, wherein said installation hole of said first fixing plate has a shape of a long arc allowing said sleeve to move thereinside.

5. The flexible pivotal device for a mannequin joint according to claim 1, wherein said first engagement member has tenons; said second engagement member is a hole matching a shape of an upper part of said first engagement member plus said tenons.

6. The flexible pivotal device for a mannequin joint according to claim 1, wherein said first fixing plate has an engagement hole; said first engagement member is inserted through said engagement hole from one side of it; a spring, a washer and a nut are used to lock said first engagement member to said first fixing plate from another side of said engagement hole.

7. The flexible pivotal device for a mannequin joint according to claim 1, wherein said male connection member further includes two threaded rods respectively connected with bottoms of said elastic elements; said threaded rod has a plurality of screw threads; a portion of said threaded rod is arranged inside said sleeve; a portion of said threaded rod is extended from a lower end of said sleeve and locked by a nut.

8. The flexible pivotal device for a mannequin joint according to claim 1, wherein said second fixing plate is embedded inside said second fixing disc; a bottom surface of said second fixing plate is coplanar with a bottom surface of said second fixing disc; a plurality of second fixing holes is formed on corresponding positions of said second fixing plate and said second fixing disc; a plurality of sets of fastening elements is used to lock said second fixing plate and said second fixing disc together.

9. The flexible pivotal device for a mannequin joint according to claim 1, wherein said connection element has at least one positioning protrusion; said second fixing plate has positioning holes whose quantity and locality is corresponding to that of said positioning protrusions; said positioning protrusions can be fitted into said positioning holes.

10. The flexible pivotal device for a mannequin joint according to claim 5, wherein after said tenons of said first engagement member are passed through said second engagement member, said male connection member or said female connection member is rotated to make said tenons non-parallel to said second engagement member.
